# EUROPEAN PATENT SPECIFICATION

(11) **EP 4 524 723 B1**
(45) Date of publication and mention of the grant of the patent: **29.07.2026**
(21) Application number: 24198318.8
(22) Date of filing: 04.09.2024
(51) Int. Cl.: G06F 8/30, G06F 11/3668, G06N 3/044, G06N 3/045, G06N 3/047, G06N 3/08, G06N 3/088, G06N 20/00, G06N 3/02

(54) **PROGRAMMING LANGUAGE TO INTERACT WITH LARGE LANGUAGE MODEL**
PROGRAMMIERSPRACHE ZUR INTERAKTION MIT EINEM GROSSEN SPRACHMODELL
LANGAGE DE PROGRAMMATION POUR INTERAGIR AVEC UN MODÈLE DE LANGAGE DE GRANDE TAILLE

(30) Priority: 13.09.2023 US 202318367798
(43) Date of publication of application: 19.03.2025
(73) Proprietor: SAP SE, 69190 Walldorf (DE)
(72) Inventor: Kunz, David, 69190 Walldorf (DE)
(74) Representative: Müller-Boré & Partner Patentanwälte PartG mbB

(56) References cited:
- BARKE SHRADDHA ET AL: "Grounded Copilot: How Programmers Interact with Code-Generating Models", PROCEEDINGS OF THE ACM ON PROGRAMMING LANGUAGES, ACMPUB27, NEW YORK, NY, USA, vol. 7, no. OOPSLA1, 6 April 2023 (2023-04-06), pages 85 - 111, XP058984015, DOI: 10.1145/3586030
- DISHA SHRIVASTAVA ET AL: "Repository-Level Prompt Generation for Large Language Models of Code", ARXIV.ORG, CORNELL UNIVERSITY LIBRARY, 201 OLIN LIBRARY CORNELL UNIVERSITY ITHACA, NY 14853, 5 June 2023 (2023-06-05), XP091529112
- MATTHEW JIN ET AL: "InferFix: End-to-End Program Repair with LLMs", ARXIV.ORG, CORNELL UNIVERSITY LIBRARY, 201 OLIN LIBRARY CORNELL UNIVERSITY ITHACA, NY 14853, 13 March 2023 (2023-03-13), XP091459943

## Description

### TECHNICAL FIELD

This document generally relates to computer systems. More specifically, this document relates to use of Large Language Models (LLMs) for generating and validating code.

### BACKGROUND

A LLM refers to an artificial intelligence (AI) system that has been trained on an extensive dataset to understand and generate human language. These models are designed to process and comprehend natural language in a way that allows them to answer questions, engage in conversations, generate text, and perform various language-related tasks.

"BARKE SHRADDHA ET AL : "Grounded Copilot : How Programmers Interact with Code-Generating Models", PROCEEDINGS OF THE ACM ON PROGRAMMING LANGUAGES, ACMPUB27, NEW YORK, NY, USA, vol. 7, no. OOPSLA1, 6 April 2023 (2023-04-06), pages 85-111, DOI : 10.1145/3586030" describes the first grounded theory analysis of how programmers interact with Copilot, based on observing 20 participants-with a range of prior experience using the assistant-as they solve diverse programming tasks across four languages. It is described that interactions with programming assistants are bimodal: in acceleration mode, the programmer knows what to do next and uses Copilot to get there faster; in exploration mode, the programmer is unsure how to proceed and uses Copilot to explore their options. Recommendations for improving the usability of future AI programming assistants are provided.

"DISHA SHRIVASTAVA ET AL: "Repository-Level Prompt Generation for Large Language Models of Code", ARXIV.ORG, CORNELL UNIVERSITY LIBRARY, 201 OLIN LIBRARY CORNELL UNIVERSITY ITHACA, NY 14853, 5 June 2023 (2023-06-05)" describes a framework called Repo-Level Prompt Generator that learns to generate example-specific prompts using prompt proposals. The prompt proposals take context from the entire repository, thereby incorporating both the structure of the repository and the context from other relevant files (e.g. imports, parent class files).

"MATTHEW JIN ET AL: "InferFix: End-to-End Program Repair with LLMs", ARXIV.ORG, CORNELL UNIVERSITY LIBRARY, 201 OLIN LIBRARY CORNELL UNIVERSITY ITHACA, NY 14853, 13 March 2023 (2023-03-13)" describes InferFix, a transformer-based program repair framework paired with a state-of-the-art static analyzer to fix critical security and performance bugs. InferFix combines a Retriever -- transformer encoder model pretrained via contrastive learning objective, which aims at searching for semantically equivalent bugs and corresponding fixes, and a Generator -- a large language model (Codex Cushman) finetuned on supervised bug-fix data with prompts augmented via bug type annotations and semantically similar fixes retrieved from an external non-parametric memory.

### BRIEF DESCRIPTION OF DRAWINGS

The present disclosure is illustrated by way of example and not limitation in the figures of the accompanying drawings, in which like references indicate similar elements.
Figure 1 is a block diagram illustrating a system for automatically generating software programming code, in accordance with an example embodiment.
Figure 2 is a flow diagram illustrating a method for automatically generating a portion of software programming code, in accordance with an embodiment.
Figure 3 is a block diagram illustrating an architecture of software, which can be installed on any one or more of the devices described above.
Figure 4 illustrates a diagrammatic representation of a machine in the form of a computer system within which a set of instructions may be executed for causing the machine to perform any one or more of the methodologies discussed herein, according to an example embodiment.

### DETAILED DESCRIPTION

The underlying technical problem is solved by the subject-matter having the features of the independent claims. Additional embodiments are defined in the dependent claims.

The description that follows discusses illustrative systems, methods, techniques, instruction sequences, and computing machine program products. In the following description, for purposes of explanation, numerous specific details are set forth in order to provide an understanding of various example embodiments of the present subject matter. It will be evident, however, to those skilled in the art, that various example embodiments of the present subject matter may be practiced without these specific details.

Generating programming code to create new software applications can be tedious and time consuming. LLMs provide an opportunity to speed up this process greatly by allowing a computer model to create programming code based on natural language user prompts. Technical problems are encountered, however, with the use of LLMs to create programming code. Specifically, the generated code typically has errors that have to be fixed manually and iteratively by a user, often because the LLM does not have access to contextual information that would aid in making the code either fit the user's intent better or match the syntax of the desired programming language. Further, the use of generated code requires a lot of copy and pasting by the user.

In an example embodiment, a software package is provided which provides an interface such that when the software is executed, a user is able to provide a natural language prompt using a scripting language that directs the interface to interact with an LLM, adding contextual information to prompts sent to the LLM. The interface is then also able to extract and evaluate programming code generated by the LLM, so that the generated code may be used immediately in a software package without the need for user edits and/or copy/pasting.

LLMs used to generate information are generally referred to as Generative Artificial Intelligence (GAI) models. A GAI model may be implemented as a generative pre-trained transformer (GPT) model or a bidirectional encoder. A GPT model is a type of machine learning model that uses a transformer architecture, which is a type of deep neural network that excels at processing sequential data, such as natural language.

A bidirectional encoder is a type of neural network architecture in which the input sequence is processed in two directions: forward and backward. The forward direction starts at the beginning of the sequence and processes the input one token at a time, while the backward direction starts at the end of the sequence and processes the input in reverse order.

By processing the input sequence in both directions, bidirectional encoders can capture more contextual information and dependencies between words, leading to better performance.

The bidirectional encoder may be implemented as a Bidirectional Long Short-Term Memory (BiLSTM) or BERT (Bidirectional Encoder Representations from Transformers) model.

Each direction has its own hidden state, and the final output is a combination of the two hidden states.

Long Short-Term Memories (LSTMs) are a type of recurrent neural network (RNN) that are designed to overcome a vanishing gradient problem in traditional RNNs, which can make it difficult to learn long-term dependencies in sequential data.

LSTMs include a cell state, which serves as a memory that stores information over time. The cell state is controlled by three gates: the input gate, the forget gate, and the output gate. The input gate determines how much new information is added to the cell state, while the forget gate decides how much old information is discarded. The output gate determines how much of the cell state is used to compute the output. Each gate is controlled by a sigmoid activation function, which outputs a value between 0 and 1 that determines the amount of information that passes through the gate.

In BiLSTM, there is a separate LSTM for the forward direction and the backward direction. At each time step, the forward and backward LSTM cells receive the current input token and the hidden state from the previous time step. The forward LSTM processes the input tokens from left to right, while the backward LSTM processes them from right to left.

The output of each LSTM cell at each time step is a combination of the input token and the previous hidden state, which allows the model to capture both short-term and long-term dependencies between the input tokens.

BERT applies bidirectional training of a model known as a transformer to language modelling. This is in contrast to prior art solutions that looked at a text sequence either from left to right or right to left. A bidirectionally trained language model has a deeper sense of language context and flow than single-direction language models.

More specifically, the transformer encoder reads the entire sequence of information at once and thus is considered to be bidirectional (although one could argue that it is, in reality, non-directional). This characteristic allows the model to learn the context of a piece of information based on all of its surroundings.

In other example embodiments, a generative adversarial network (GAN) embodiment may be used. GAN is a supervised machine learning model that has two sub-models: a generator model that is trained to generate new examples and a discriminator model that tries to classify examples as either real or generated. The two models are trained together in an adversarial manner (using a zero sum game according to game theory), until the discriminator model is fooled roughly half the time, which means that the generator model is generating plausible examples.

The generator model takes a fixed-length random vector as input and generates a sample in the domain in question. The vector is drawn randomly from a Gaussian distribution, and the vector is used to seed the generative process. After training, points in this multidimensional vector space will correspond to points in the problem domain, forming a compressed representation of the data distribution. This vector space is referred to as a latent space or a vector space comprised of latent variables. Latent variables, or hidden variables, are those variables that are important for a domain but are not directly observable.

The discriminator model takes an example from the domain as input (real or generated) and predicts a binary class label of real or fake (generated).

Generative modeling is an unsupervised learning problem, although a clever property of the GAN architecture is that the training of the generative model is framed as a supervised learning problem.

The two models (the generator and discriminator) are trained together. The generator generates a batch of samples, and these, along with real examples from the domain, are provided to the discriminator and classified as real or fake.

The discriminator is then updated to get better at discriminating real and fake samples in the next round and, importantly, the generator is updated based on how well the generated samples fooled the discriminator.

In another example embodiment, the GAI model is a Variational AutoEncoder (VAE) model. VAEs comprise an encoder network that compresses the input data into a lower-dimensional representation, called a latent code, and a decoder network that generates new data from the latent code.

No matter the form o the GAI model, the GAI model contains a generative classifier, which can be implemented as, for example, a naive Bayes classifier.

The present solution works with any type of GAI model, although an implementation that specifically is used with a GPT model will be described. In such an implementation, the programming language provided by the interface may be called PromptScript, because it is designed to interact with a GPT model via a prompt and it is a scripting language. In some example embodiments, this scripting language may be built on top of an existing scripting language, such as JavaScript, but that is not required.

Furthermore, in an example embodiment a caching mechanism is introduced that caches the generated code so that if an identical natural language prompt in the scripting language (e.g., PromptScript) is provided at a later time, then the previously generated code may be retrieved from the cache and utilized rather than require the code be generated again, thereby greatly speeding execution of future invocations of prompts.

The present solution also works with any type of application developer software.

Cloud computing can be described as Internet-based computing that provides shared computer processing resources and data to computers and other devices on demand. Users can establish respective sessions during which processing resources and bandwidth are consumed. During a session, for example, a user is provided on-demand access to a shared pool of configurable computing resources (e.g., computer networks, servers, storage, applications, and services). The computing resources can be provisioned and released (e.g., scaled) to meet user demand.

A common architecture in cloud platforms includes services (also referred to as microservices), which have gained popularity in service-oriented architectures (SOAs). In such SOAs, applications are composed of multiple, independent services. The services are deployed and managed within the cloud platform and run on top of a cloud infrastructure. In some examples, service-based applications can be created and/or extended using an application programming framework. In an example embodiment, the software servers created implement the services.

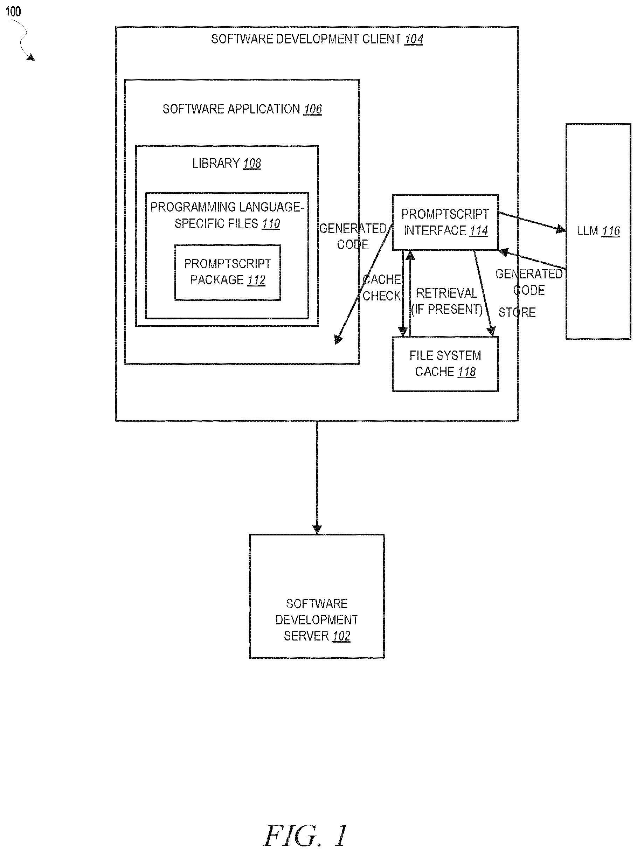

Figure 1 is a block diagram illustrating a system 100 for automatically generating software programming code, in accordance with an example embodiment. Here, a application development server 102 provides a server allowing one or more clients, such as application development client 104, to create and manage software servers, such as OData servers for web services. The application development client 104 is generally used to control application development server 102 to create an application using a first programming language, and the application development client 104 may be where the user creates a software application 106 (although in such cases it would commonly also be stored at the application development server 102 as a backup and/or to allow other users to edit it). This aspect is not intended to be limiting, however, and in some example embodiments, the software application 106 is created exclusively on the application development server 102. The software application 106, which is essentially in programming language form until it is compiled or interpreted, includes a library 108 including programming language-specific files 110. For example, if the user wishes to use to application development client 104 to create an application in JavaScript, the programming language-specific files are JavaScript libraries.

In an example embodiment, a specialized programming language is added on top of the programming language that the user wishes to program in, which here is JavaScript, and thus an interface package, here called PromptScript package 112, is included in the programming language-specific files 110 in the library 108. The PromptScript package 112 includes all the files needed to create and execute the LLM programming language interface described herein.

Thus, when executed, the PromptScript package 112 launches a PromptScript interface 114, with which the user can communicate to generate application code using LLM 116.

As mentioned earlier, a file system cache 118 may be provided that caches code generated by the LLM 116 for future invocations.

More particularly, the PromptScript interface 114 receives a prompt from the user (via the application development client 104). First, the file system cache 118 is checked to determine if the same prompt was received and processed previously. This may be performed by, for example, applying a hash function to the provided prompt and determining if the hash generated by the hash function is already stored in the system cache. If so, then the generated code associated with the hash can be returned to the PromptScript package 112, from the file system cache 118, for use as part of the application code the user is constructing.

If not, then the PromptScript interface 114 adds a predefined system message to the prompt and sends the combined system message/prompt (including any provided test function(s)) to the LLM 116, which generates code based on the combined system message/prompt. The PromptScript interface 114 then parses this code. The system message may have instructed the LLM 116 to return the code inside a markdown fence. A markdown fence, also known as a code fence or code block, is a feature in syntax where blocks of code are represented by inserting special characters before and after the blocks of code that are being highlighted. For example, backticks (') or tildes (~) may be inserted at the beginning and end of the code block to delineate the edges of the code.

The PromptScript interface 114 is then able to parse the code returned by looking for the fences, which allows the PromptScript interface 114 to discard any extraneous text returned outside the fences. Thus, for example, the LLM 116 may return some generated JavaScript code inside a fence along with some extraneous text before or after the JavaScript code, and the PromptScript interface 114 is then able to extract the JavaScript code using the fences. If no such fences are found, however, the PromptScript interface 114 may accept the returned code as is.

The PromptScript interface 114 then uses a programming language-specific validation function to validate the code. JavaScript contains a function called "eval" that evaluates whether provided code meets the syntactical and other programming requirements of JavaScript, and then executes it. The eval function returns the result of whatever expression is inside an input string. If the code is invalid, it will return an error. A test function is an invocation of a generated piece of code using a specified input with a desired specified output. Each test function provides a way for the PromptScript interface 114 to determine whether the generated code is meeting the user's intent for the generated code.

As an example, a user may wish to generate a Fibonacci function in JavaScript that, when executed, generates a value of the Fibonacci sequence at the position specified by the input to the function. Thus, for example, the user may wish for the Fibonacci function to return a "3" if input a "4," as "3" is in the 4^{th} position of the Fibonacci sequence (assuming the initial position in the sequence is assigned a position of 0). If a user enters a prompt of simply "Generate a Fibonacci function in JavaScript" to the PromptScript interface 114, there is a chance that the generated function will not meet the user's intent for the function. For example, the generated function might return a function that outputs the entire sequence of values in the Fibonacci sequence up to an including the inputted position (e.g., it would return "0, 1, 1, 2, 3" if a "4" is input. Thus, in order to avoid this scenario, the user can provide the test functions "assert.equal(x(0), 0)" and "assert.equal(x(1), 1)," which specify the desired outputs of the generated function given specific input.

If the PromptScript interface 114 determines that the returned code failed at any stage (e.g., is unparsable, failed the validation function, or failed any of the test functions provided by the user), then it repeats the request to the LLM to generate the code, essentially retrying the code generation. This continues until all of these evaluations are passed.

Once code that passes all the evaluations has been received, it may be both returned to the programming language-specific files 110 and/or application development client 104 for use in a computer program (e.g., to be later compiled or interpreted), as well as written to the file system cache 118 for storage.

The PromptScript interface 114 allows for scripting language commands in PromptScript to be specified within the computer code being written by the user. Thus, for example, if the user is creating a JavaScript program, then the user may first indicate in the JavaScript program that the PromptScript package 112 should be loaded, such as by specifying a "const p = require('PromptScript')" command at or near the beginning of the JavaScript code. The PromptScript package then specifies a series of commands that can be used within the JavaScript code to trigger the LLM calls needed to generate code.

Thus, the user may type the following into the software code of the software application 106 to continue the Fibonacci function described above:

```
Const result = p 'a fibonnaci function' .t(x => {
             assert.equal(x(0), 0)
             assert.equal(x(1), 1)
             }
```

From this, the PromptScript interface 114 generates a natural language prompt as follows, which can then be passed with a system message to the LLM 116:
Create a Javascript
Fibonnaci function
Which satisfies
   assert.equal(x(0), 0)
   assert.equal(x(1), 1)

The system message may be as follows:
const systemMsg = "You are a Node.js expert. Create the described JavaScript thing and return it inside a ‴js...‴ fence so I can write 'const result = eval(...)' to get it, don't output additional text. Example:\n‴js\nconst x = function(a){ console.log(a) };x‴ʺ
let userMsg = string
if (testFunction) userMsg += '\nso it satisfies the following test function\n' + testFunction.toString()

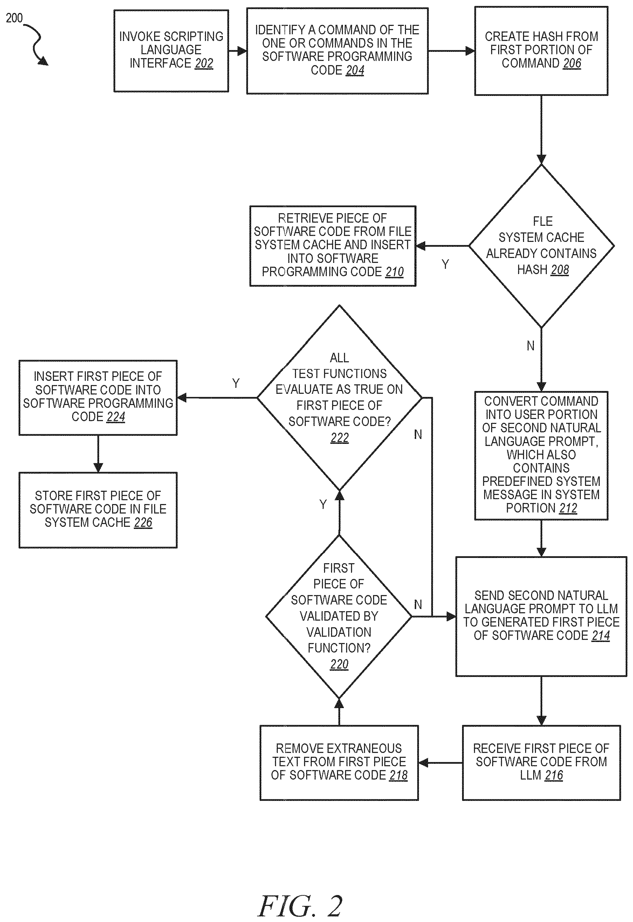

Figure 2 is a flow diagram illustrating a method 200 for automatically generating a portion of software programming code, in accordance with an embodiment. Here, at operation 202, a scripting language interface specified in software programming code is invoked. The scripting language interface is designed to identify one or more specific commands in software programming code. At operation 204, the scripting language interface identifies a command of the one or more specific commands in the software programming code. This command includes a first portion containing a first natural language prompt to generate a piece of software code, and a second portion containing one or more test functions.

At operation 206, a hash is created from the first portion by passing the first portion through a hash function. At operation 208, a file system cache is checked using the hash to determine whether the file system cache already contains the hash. If so, then the piece of software code has already been generated and stored in the file system cache, and thus at operation 210, the piece of software code is retrieved from the file system cache and inserted into the software programming code. More specifically, the code (in the form of a string) is evaluated using the eval function, and hence it is essentially interpreted on the fly.

If not, then at operation 212, the command (including the first portion and the second portion) is converted by the scripting language interface into a user portion of a second natural language prompt, which also includes a predefined system message in a system portion. At operation 214, the second natural language prompt is sent as input to an LLM, which generates the piece of software code based on the second natural language prompt. At operation 216, the generated piece of software code is received by the scripting language interface.

At operation 218, extraneous text is removed from the generated first piece of software code. This may include removing any text outside of a markdown fence in cases where the system message instructs the LLM to generate the code within a markdown fence.

At operation 220, the generated piece of software code is evaluated using an evaluation function for a programming language of the software programming code to determine whether the generated piece of software code is valid according to one or more requirements of the programming language. If not, then the method 200 returns to operation 214, which retries the sending of the second natural language prompt to the LLM.

If so, then at operation 222, the generated piece of software code is tested using the one or more test functions, to determine if all of the one or more test functions evaluate as true. If not, then the method 200 returns to operation 214, which retries the sending of the second natural language prompt to the LLM.

If so, then at operation 224 the generated piece of software code is inserted into the software programming code. More specifically, the code (in the form of a string) is evaluated using the eval function, and hence it is essentially interpreted on the fly. At operation 226, the generated piece of software code is stored in the file system cache so that future invocations of the first prompt do not require code to be regenerated, speeding up future invocations.

If an error is returned at any stage, then the method 200 may cause the second natural language prompt to be resent to the LLM. This may cause a different output to be generated by the LLM, at least in non-zero temperature LLMs (nondeterministic LLMs). Optionally, any error returned may be fed to the LLM along with the second natural language prompt to essentially instruct the LLM to avoid that error in the future.

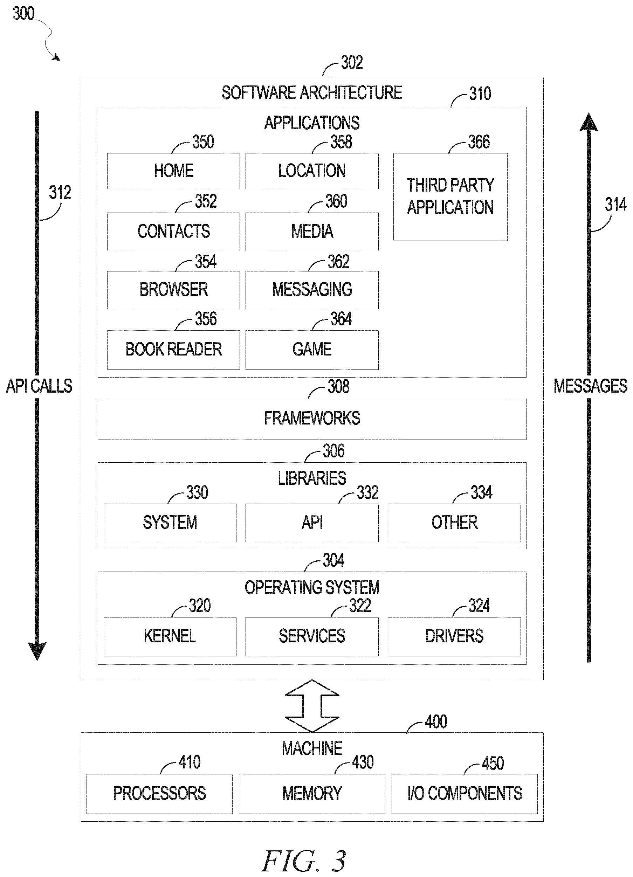

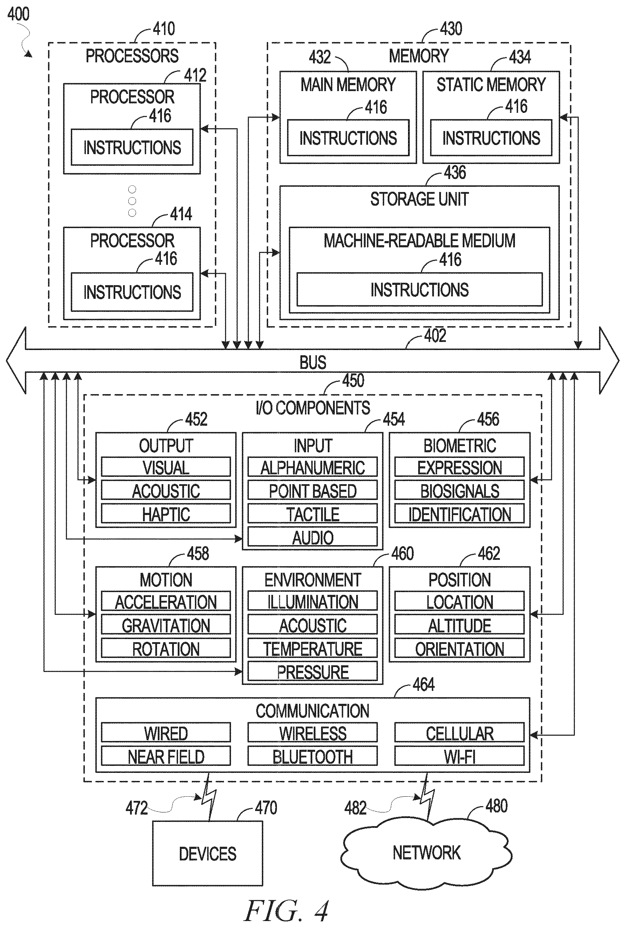

Figure 3 is a block diagram 300 illustrating a software architecture 302, which can be installed on any one or more of the devices described above. Figure 3 is merely a non-limiting example of a software architecture, and it will be appreciated that many other architectures can be implemented to facilitate the functionality described herein. In various embodiments, the software architecture 302 is implemented by hardware such as a machine 400 of Figure 4 that includes processors 410, memory 430, and input/output (I/O) components 450. In this example architecture, the software architecture 302 can be conceptualized as a stack of layers where each layer may provide a particular functionality. For example, the software architecture 302 includes layers such as an operating system 304, libraries 306, frameworks 308, and applications 310. Operationally, the applications 310 invoke API calls 312 through the software stack and receive messages 314 in response to the API calls 312, consistent with some embodiments.

In various implementations, the operating system 304 manages hardware resources and provides common services. The operating system 304 includes, for example, a kernel 320, services 322, and drivers 324. The kernel 320 acts as an abstraction layer between the hardware and the other software layers, consistent with some embodiments. For example, the kernel 320 provides memory management, processor management (e.g., scheduling), component management, networking, and security settings, among other functionalities. The services 322 can provide other common services for the other software layers. The drivers 324 are responsible for controlling or interfacing with the underlying hardware, according to some embodiments. For instance, the drivers 324 can include display drivers, camera drivers, BLUETOOTH^{®} or BLUETOOTH^{®} Low-Energy drivers, flash memory drivers, serial communication drivers (e.g., Universal Serial Bus (USB) drivers), Wi-Fi^{®} drivers, audio drivers, power management drivers, and so forth.

In some embodiments, the libraries 306 provide a low-level common infrastructure utilized by the applications 310. The libraries 306 can include system libraries 330 (e.g., C standard library) that can provide functions such as memory allocation functions, string manipulation functions, mathematic functions, and the like. In addition, the libraries 306 can include API libraries 332 such as media libraries (e.g., libraries to support presentation and manipulation of various media formats such as Moving Picture Experts Group-4 (MPEG4), Advanced Video Coding (H.264 or AVC), Moving Picture Experts Group Layer-3 (MP3), Advanced Audio Coding (AAC), Adaptive Multi-Rate (AMR) audio codec, Joint Photographic Experts Group (JPEG or JPG), or Portable Network Graphics (PNG)), graphics libraries (e.g., an OpenGL framework used to render in two dimensions (2D) and three dimensions (3D) in a graphic context on a display), database libraries (e.g., SQLite to provide various relational database functions), web libraries (e.g., WebKit to provide web browsing functionality), and the like. The libraries 306 can also include a wide variety of other libraries 334 to provide many other APIs to the applications 310.

The frameworks 308 provide a high-level common infrastructure that can be utilized by the applications 310, according to some embodiments. For example, the frameworks 308 provide various graphical user interface functions, high-level resource management, high-level location services, and so forth. The frameworks 308 can provide a broad spectrum of other APIs that can be utilized by the applications 310, some of which may be specific to a particular operating system 304 or platform.

In an example embodiment, the applications 310 include a home application 350, a contacts application 352, a browser application 354, a book reader application 356, a location application 358, a media application 360, a messaging application 362, a game application 364, and a broad assortment of other applications, such as a third-party application 366. According to some embodiments, the applications 310 are programs that execute functions defined in the programs. Various programming languages can be employed to create one or more of the applications 310, structured in a variety of manners, such as object-oriented programming languages (e.g., Objective-C, Java, or C++) or procedural programming languages (e.g., C or assembly language). In a specific example, the third-party application 366 (e.g., an application developed using the ANDROID^{™} or IOS^{™} software development kit (SDK) by an entity other than the vendor of the particular platform) may be mobile software running on a mobile operating system such as IOS^{™}, ANDROID^{™}, WINDOWS^{®} Phone, or another mobile operating system. In this example, the third-party application 366 can invoke the API calls 312 provided by the operating system 304 to facilitate functionality described herein.

Figure 4 illustrates a diagrammatic representation of a machine 400 in the form of a computer system within which a set of instructions may be executed for causing the machine 400 to perform any one or more of the methodologies discussed herein, according to an example embodiment. Specifically, Figure 4 shows a diagrammatic representation of the machine 400 in the example form of a computer system, within which instructions 416 (e.g., software, a program, an application, an applet, an app, or other executable code) for causing the machine 400 to perform any one or more of the methodologies discussed herein may be executed. For example, the instructions 416 may cause the machine 400 to execute the method 200 of Figure 2. Additionally, or alternatively, the instructions 416 may implement Figures 1-2 and so forth. The instructions 416 transform the general, non-programmed machine 400 into a particular machine 400 programmed to carry out the described and illustrated functions in the manner described. In alternative embodiments, the machine 400 operates as a standalone device or may be coupled (e.g., networked) to other machines. In a networked deployment, the machine 400 may operate in the capacity of a server machine or a client machine in a server-client network environment, or as a peer machine in a peer-to-peer (or distributed) network environment. The machine 400 may comprise, but not be limited to, a server computer, a client computer, a personal computer (PC), a tablet computer, a laptop computer, a netbook, a set-top box (STB), a personal digital assistant (PDA), an entertainment media system, a cellular telephone, a smart phone, a mobile device, a wearable device (e.g., a smart watch), a smart home device (e.g., a smart appliance), other smart devices, a web appliance, a network router, a network switch, a network bridge, or any machine capable of executing the instructions 416, sequentially or otherwise, that specify actions to be taken by the machine 400. Further, while only a single machine 400 is illustrated, the term "machine" shall also be taken to include a collection of machines 400 that individually or jointly execute the instructions 416 to perform any one or more of the methodologies discussed herein.

The machine 400 may include processors 410, memory 430, and I/O components 450, which may be configured to communicate with each other such as via a bus 402. In an example embodiment, the processors 410 (e.g., a central processing unit (CPU), a reduced instruction set computing (RISC) processor, a complex instruction set computing (CISC) processor, a graphics processing unit (GPU), a digital signal processor (DSP), an application-specific integrated circuit (ASIC), a radio-frequency integrated circuit (RFIC), another processor, or any suitable combination thereof) may include, for example, a processor 412 and a processor 414 that may execute the instructions 416. The term "processor" is intended to include multi-core processors that may comprise two or more independent processors (sometimes referred to as "cores") that may execute instructions 416 contemporaneously. Although Figure 4 shows multiple processors 410, the machine 400 may include a single processor 412 with a single core, a single processor 412 with multiple cores (e.g., a multi-core processor 412), multiple processors 412, 414 with a single core, multiple processors 412, 414 with multiple cores, or any combination thereof.

The memory 430 may include a main memory 432, a static memory 434, and a storage unit 436, each accessible to the processors 410 such as via the bus 402. The main memory 432, the static memory 434, and the storage unit 436 store the instructions 416 embodying any one or more of the methodologies or functions described herein. The instructions 416 may also reside, completely or partially, within the main memory 432, within the static memory 434, within the storage unit 436, within at least one of the processors 410 (e.g., within the processor's cache memory), or any suitable combination thereof, during execution thereof by the machine 400.

The I/O components 450 may include a wide variety of components to receive input, provide output, produce output, transmit information, exchange information, capture measurements, and so on. The specific I/O components 450 that are included in a particular machine will depend on the type of machine. For example, portable machines such as mobile phones will likely include a touch input device or other such input mechanisms, while a headless server machine will likely not include such a touch input device. It will be appreciated that the I/O components 450 may include many other components that are not shown in Figure 4. The I/O components 450 are grouped according to functionality merely for simplifying the following discussion, and the grouping is in no way limiting. In various example embodiments, the I/O components 450 may include output components 452 and input components 454. The output components 452 may include visual components (e.g., a display such as a plasma display panel (PDP), a light-emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The input components 454 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and/or force of touches or touch gestures, or other tactile input components), audio input components (e.g., a microphone), and the like.

In further example embodiments, the I/O components 450 may include biometric components 456, motion components 458, environmental components 460, or position components 462, among a wide array of other components. For example, the biometric components 456 may include components to detect expressions (e.g., hand expressions, facial expressions, vocal expressions, body gestures, or eye tracking), measure biosignals (e.g., blood pressure, heart rate, body temperature, perspiration, or brain waves), identify a person (e.g., voice identification, retinal identification, facial identification, fingerprint identification, or electroencephalogram-based identification), and the like. The motion components 458 may include acceleration sensor components (e.g., accelerometer), gravitation sensor components, rotation sensor components (e.g., gyroscope), and so forth. The environmental components 460 may include, for example, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detect concentrations of hazardous gases for safety or to measure pollutants in the atmosphere), or other components that may provide indications, measurements, or signals corresponding to a surrounding physical environment. The position components 462 may include location sensor components (e.g., a Global Positioning System (GPS) receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 450 may include communication components 464 operable to couple the machine 400 to a network 480 or devices 470 via a coupling 482 and a coupling 472, respectively. For example, the communication components 464 may include a network interface component or another suitable device to interface with the network 480. In further examples, the communication components 464 may include wired communication components, wireless communication components, cellular communication components, near field communication (NFC) components, Bluetooth^{®} components (e.g., Bluetooth^{®} Low Energy), Wi-Fi^{®} components, and other communication components to provide communication via other modalities. The devices 470 may be another machine or any of a wide variety of peripheral devices (e.g., coupled via a USB).

Moreover, the communication components 464 may detect identifiers or include components operable to detect identifiers. For example, the communication components 464 may include radio-frequency identification (RFID) tag reader components, NFC smart tag detection components, optical reader components (e.g., an optical sensor to detect one-dimensional bar codes such as Universal Product Code (UPC) bar code, multi-dimensional bar codes such as QR code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 464, such as location via Internet Protocol (IP) geolocation, location via Wi-Fi^{®} signal triangulation, location via detecting an NFC beacon signal that may indicate a particular location, and so forth.

The various memories (e.g., 430, 432, 434, and/or memory of the processor(s) 410) and/or the storage unit 436 may store one or more sets of instructions 416 and data structures (e.g., software) embodying or utilized by any one or more of the methodologies or functions described herein. These instructions (e.g., the instructions 416), when executed by the processor(s) 410, cause various operations to implement the disclosed embodiments.

As used herein, the terms "machine-storage medium," "device-storage medium," and "computer-storage medium" mean the same thing and may be used interchangeably. The terms refer to a single or multiple storage devices and/or media (e.g., a centralized or distributed database, and/or associated caches and servers) that store executable instructions and/or data. The terms shall accordingly be taken to include, but not be limited to, solid-state memories, and optical and magnetic media, including memory internal or external to processors. Specific examples of machine-storage media, computer-storage media, and/or device-storage media include non-volatile memory, including by way of example semiconductor memory devices, e.g., erasable programmable read-only memory (EPROM), electrically erasable programmable read-only memory (EEPROM), field-programmable gate array (FPGA), and flash memory devices; magnetic disks such as internal hard disks and removable disks; magneto-optical disks; and CD-ROM and DVD-ROM disks. The terms "machine-storage media," "computer-storage media," and "device-storage media" specifically exclude carrier waves, modulated data signals, and other such media, at least some of which are covered under the term "signal medium" discussed below.

In various example embodiments, one or more portions of the network 480 may be an ad hoc network, an intranet, an extranet, a virtual private network (VPN), a local-area network (LAN), a wireless LAN (WLAN), a wide-area network (WAN), a wireless WAN (WWAN), a metropolitan-area network (MAN), the Internet, a portion of the Internet, a portion of the public switched telephone network (PSTN), a plain old telephone service (POTS) network, a cellular telephone network, a wireless network, a Wi-Fi^{®} network, another type of network, or a combination of two or more such networks. For example, the network 480 or a portion of the network 480 may include a wireless or cellular network, and the coupling 482 may be a Code Division Multiple Access (CDMA) connection, a Global System for Mobile communications (GSM) connection, or another type of cellular or wireless coupling. In this example, the coupling 482 may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High-Speed Packet Access (HSPA), Worldwide Interoperability for Microwave Access (WiMAX), Long-Term Evolution (LTE) standard, others defined by various standard-setting organizations, other long-range protocols, or other data transfer technology.

The instructions 416 may be transmitted or received over the network 480 using a transmission medium via a network interface device (e.g., a network interface component included in the communication components 464) and utilizing any one of a number of well-known transfer protocols (e.g., HTTP). Similarly, the instructions 416 may be transmitted or received using a transmission medium via the coupling 472 (e.g., a peer-to-peer coupling) to the devices 470. The terms "transmission medium" and "signal medium" mean the same thing and may be used interchangeably in this disclosure. The terms "transmission medium" and "signal medium" shall be taken to include any intangible medium that is capable of storing, encoding, or carrying the instructions 416 for execution by the machine 400, and include digital or analog communications signals or other intangible media to facilitate communication of such software. Hence, the terms "transmission medium" and "signal medium" shall be taken to include any form of modulated data signal, carrier wave, and so forth. The term "modulated data signal" means a signal that has one or more of its characteristics set or changed in such a manner as to encode information in the signal.

The terms "machine-readable medium," "computer-readable medium," and "device-readable medium" mean the same thing and may be used interchangeably in this disclosure. The terms are defined to include both machine-storage media and transmission media. Thus, the terms include both storage devices/media and carrier waves/modulated data signals.

## Claims

1. A system (400) comprising:
at least one hardware processor (410); and
a computer-readable medium (430) storing instructions that, when executed by the at least one hardware processor (410), cause the at least one hardware processor (410) to perform operations comprising:
invoking (202) a scripting language interface (114) which is specified in software programming code, which is designed to identify one or more specific commands in software programming code, and with which a user can communicate to generate an application code using a Large Language model, **LLM** (116);
identifying (204), by the scripting language interface (114), a command of the one or more specific commands in software programming code, the command defined in a scripting language interface library (108) including programming language-specific files (110), and the command including a first portion containing a first natural language prompt to generate a first piece of software code and a second portion containing one or more test functions;
converting (212), by the scripting language interface (114), the command including the first portion and the second portion into a user portion of a second natural language prompt;
adding a predefined system portion to the second natural language prompt;
sending (214) the second natural language prompt to the **LLM** (116) to generate the first piece of software code in a first programming language based on the second natural language prompt;
validating (220) the first piece of software code using a validation function of the first programming language to determine whether the first piece of software code is valid according to one or more requirements of the first programming language;
in response to a determination that the first piece of software code is valid according to the one or more requirements of the first programming language, testing (222) the first piece of software code using the one or more test functions; and
in response to a determination that the first piece of software code passes all of the one or more test functions, inserting (224) the first piece of software code into the software programming code.

2. The system of claim 1, wherein, in response to a determination that the first piece of software code fails the validation function, regenerating the first piece of software code by resending the second natural language prompt to the LLM (116).

3. The system of claim 1, wherein, in response to a determination that the first piece of software code fails one or more of the one or more test functions, regenerating the first piece of software code by resending the second natural language prompt to the LLM (116).

4. The system of any one of the preceding claims, wherein the operations further comprise:
generating (206) a hash for the command by applying a hash function to the command; and
saving (208) the hash and the first piece of software code in the file system cache (118).

5. The system of claim 4, wherein the operations further comprise:
identifying, by the scripting language interface (114), a second command in the software programming code;
generating a hash for the second command by applying the hash function to the command;
determining whether the hash for the second command is contained in the file system cache (118); and
in response to a determination that the hash for the second command is contained in the file system cache (118), retrieving (210) the first piece of software code from the file system cache (118) and inserting the first piece of software code into the software programming code in lieu of converting the command into a user portion of the second natural language prompt and sending the second natural language prompt to the LLM (116).

6. A method (200) comprising:
invoking (202) a scripting language interface (114) which is specified in software programming code, which is designed to identify one ore more specific commands in software programming code, and with which a user can communicate to generate an application code using a Large Language model, LLM (116);
identifying (204), by the scripting language interface (114), a command of the one or more specific commands in software programming code, the command defined in a scripting language interface library (108) including programming language-specific files (110), and the command including a first portion containing a first natural language prompt to generate a first piece of software code and a second portion containing one or more test functions;
converting (212), by the scripting language interface (114), the command including the first portion and the second portion into a user portion of a second natural language prompt;
adding a predefined system portion to the second natural language prompt;
sending (214) the second natural language prompt to the LLM (116) to generate the first piece of software code in a first programming language based on the second natural language prompt;
validating (220) the first piece of software code using a validation function of the first programming language to determine whether the first piece of software code is valid according to one or more requirements of the first programming language;
in response to a determination that the first piece of software code is valid according to the one or more requirements of the first programming language, testing (222) the first piece of software code using the one or more test functions; and
in response to a determination that the first piece of software code passes all of the one or more test functions, inserting (224) the first piece of software code into the software programming code.

7. The method of claim 6, wherein, in response to a determination that the first piece of software code fails the validation function, regenerating the first piece of software code by resending the second natural language prompt to the LLM (116).

8. The method of claim 6, wherein, in response to a determination that the first piece of software code fails one or more of the one or more test functions, regenerating the first piece of software code by resending the second natural language prompt to the LLM (116).

9. The method of any one of claims 6 to 8, further comprising:
generating a hash for the command by applying a hash function to the command; and
saving the hash and the first piece of software code in the file system cache (118).

10. The method of claim 9, further comprising:
identifying, by the scripting language interface (114), a second command in the software programming code;
generating a hash for the second command by applying the hash function to the command;
determining whether the hash for the second command is contained in the file system cache (118); and
in response to a determination that the hash for the second command is contained in the file system cache (118), retrieving the first piece of software code from the file system cache (118) and inserting the first piece of software code into the software programming code in lieu of converting the command into a user portion of the second natural language prompt and sending the second natural language prompt to the LLM (116).

11. A non-transitory machine-readable medium storing instructions which, when executed by one or more processors (410), cause the one or more processors (410) to perform operations according to any one of claims 6 to 10.

## Patentansprüche

1. System (400), umfassend:
mindestens einen Hardwareprozessor (410); und
ein computerlesbares Medium (430), das Anweisungen speichert, die, wenn sie durch den mindestens einen Hardwareprozessor (410) ausgeführt werden, bewirken, dass der mindestens eine Hardwareprozessor (410) Vorgänge ausführt, umfassend:
Aufrufen (202) einer Skriptsprache-Schnittstelle (114), die in Software-Programmiercode spezifiziert ist, die zum Identifizieren eines spezifischen Befehls oder mehrerer spezifischer Befehle in Software-Programmiercode ausgestaltet ist und mit der ein Benutzer zum Erzeugen eines Anwendungscodes unter Verwendung eines großen Sprachmodells, LLM (116) kommunizieren kann;
Identifizieren (204), durch die Skriptsprache-Schnittstelle (114), eines Befehls des einen spezifischen Befehls oder der mehreren spezifischen Befehle in Software-Programmiercode, wobei der Befehl in einer Skriptsprache-Schnittstellenbibliothek (108) festgelegt ist, die programmiersprachenspezifische Dateien (110) umfasst, und der Befehl einen ersten Abschnitt, der eine erste Aufforderung in natürlicher Sprache zum Erzeugen eines ersten Teils eines Softwarecodes enthält, und einen zweiten Abschnitt umfasst, der ein oder mehrere Prüffunktion(en) enthält;
Umwandeln (212), durch die Skriptsprache-Schnittstelle (114), des Befehls, der den ersten Abschnitt und den zweiten Abschnitt umfasst, in einen Benutzerabschnitt einer zweiten Aufforderung in natürlicher Sprache;
Hinzufügen eines im Vorhinein festgelegten Systemabschnitts zu der zweiten Aufforderung in natürlicher Sprache;
Senden (214) der zweiten Aufforderung in natürlicher Sprache zu dem LLM (116) zum Erzeugen des ersten Teils des Softwarecodes in einer ersten Programmiersprache auf der Basis der zweiten Aufforderung in natürlicher Sprache;
Validieren (220) des ersten Teils des Softwarecodes unter Verwendung einer Validierungsfunktion der ersten Programmiersprache zum Bestimmen, ob der erste Teil des Softwarecodes gemäß einer oder mehreren Anforderung(en) der ersten Programmiersprache gültig ist;
als Antwort auf eine Bestimmung, dass der erste Teil des Softwarecodes gemäß der einen oder den mehreren Anforderung(en) der ersten Programmiersprache gültig ist, Prüfen (222) des ersten Teils des Softwarecodes unter Verwendung der einen oder der mehreren Prüffunktion(en); und
als Antwort auf eine Bestimmung, dass der erste Teil des Softwarecodes alle der einen oder der mehreren Prüffunktion(en) erfüllt, Einsetzen (224) des ersten Teils des Softwarecodes in den Software-Programmiercode.

2. System nach Anspruch 1, wobei, als Antwort auf eine Bestimmung, dass der erste Teil des Softwarecodes die Validierungsfunktion nicht erfüllt, der erste Teil des Softwarecodes durch erneutes Senden der zweiten Aufforderung in natürlicher Sprache zu dem LLM (116) erneut erzeugt wird.

3. System nach Anspruch 1, wobei, als Antwort auf eine Bestimmung, dass der erste Teil des Softwarecodes eine oder mehrere der einen oder der mehreren Prüffunktion(en) nicht erfüllt, der erste Teil des Softwarecodes durch erneutes Senden der zweiten Aufforderung in natürlicher Sprache zu dem LLM (116) erneut erzeugt wird.

4. System nach einem der vorhergehenden Ansprüche, wobei die Vorgänge ferner umfassen:
Erzeugen (206) eines Hash für den Befehl durch Anwenden einer Hash-Funktion auf den Befehl; und
Speichern (208) des Hash und des ersten Teils des Softwarecodes in dem Dateisystem-Zwischenspeicher (118).

5. System nach Anspruch 4, wobei die Vorgänge ferner umfassen:
Identifizieren, durch die Skriptsprache-Schnittstelle (114), eines zweiten Befehls in dem Software-Programmiercode;
Erzeugen eines Hash für den zweiten Befehl durch Anwenden der Hash-Funktion auf den Befehl;
Bestimmen, ob der Hash für den zweiten Befehl in dem Dateisystem-Zwischenspeicher (118) enthalten ist; und
als Antwort auf eine Bestimmung, dass der Hash für den zweiten Befehl in dem Dateisystem-Zwischenspeicher (118) enthalten ist, Abfragen (210) des ersten Teils des Softwarecodes von dem Dateisystem-Zwischenspeicher (118) und Einsetzen des ersten Teils des Softwarecodes in den Software-Programmiercode anstelle des Umwandelns des Befehls in einen Benutzerabschnitt der zweiten Aufforderung in natürlicher Sprache und des Sendens der zweiten Aufforderung in natürlicher Sprache zu dem LLM (116).

6. Verfahren (200), umfassend:
Aufrufen (202) einer Skriptsprache-Schnittstelle (114), die in Software-Programmiercode spezifiziert ist, die zum Identifizieren eines spezifischen Befehls oder mehrerer spezifischer Befehle in Software-Programmiercode ausgestaltet ist und mit der ein Benutzer zum Erzeugen eines Anwendungscodes unter Verwendung eines großen Sprachmodells, LLM (116) kommunizieren kann;
Identifizieren (204), durch die Skriptsprache-Schnittstelle (114), eines Befehls des einen spezifischen Befehls oder der mehreren spezifischen Befehle in Software-Programmiercode, wobei der Befehl in einer Skriptsprache-Schnittstellenbibliothek (108) festgelegt ist, die programmiersprachenspezifische Dateien (110) umfasst, und der Befehl einen ersten Abschnitt, der eine erste Aufforderung in natürlicher Sprache zum Erzeugen eines ersten Teils eines Softwarecodes enthält, und einen zweiten Abschnitt umfasst, der ein oder mehrere Prüffunktion(en) enthält;
Umwandeln (212), durch die Skriptsprache-Schnittstelle (114), des Befehls, der den ersten Abschnitt und den zweiten Abschnitt umfasst, in einen Benutzerabschnitt einer zweiten Aufforderung in natürlicher Sprache;
Hinzufügen eines im Vorhinein festgelegten Systemabschnitts zu der zweiten Aufforderung in natürlicher Sprache;
Senden (214) der zweiten Aufforderung in natürlicher Sprache zu dem LLM (116) zum Erzeugen des ersten Teils des Softwarecodes in einer ersten Programmiersprache auf der Basis der zweiten Aufforderung in natürlicher Sprache;
Validieren (220) des ersten Teils des Softwarecodes unter Verwendung einer Validierungsfunktion der ersten Programmiersprache zum Bestimmen, ob der erste Teil des Softwarecodes gemäß einer oder mehreren Anforderung(en) der ersten Programmiersprache gültig ist;
als Antwort auf eine Bestimmung, dass der erste Teil des Softwarecodes gemäß der einen oder den mehreren Anforderung(en) der ersten Programmiersprache gültig ist, Prüfen (222) des ersten Teils des Softwarecodes unter Verwendung der einen oder der mehreren Prüffunktion(en); und
als Antwort auf eine Bestimmung, dass der erste Teil des Softwarecodes alle der einen oder der mehreren Prüffunktion(en) erfüllt, Einsetzen (224) des ersten Teils des Softwarecodes in den Software-Programmiercode.

7. Verfahren nach Anspruch 6, wobei, als Antwort auf eine Bestimmung, dass der erste Teil des Softwarecodes die Validierungsfunktion nicht erfüllt, der erste Teil des Softwarecodes durch erneutes Senden der zweiten Aufforderung in natürlicher Sprache zu dem LLM (116) erneut erzeugt wird.

8. Verfahren nach Anspruch 6, wobei, als Antwort auf eine Bestimmung, dass der erste Teil des Softwarecodes eine oder mehrere der einen oder der mehreren Prüffunktion(en) nicht erfüllt, der erste Teil des Softwarecodes durch erneutes Senden der zweiten Aufforderung in natürlicher Sprache zu dem LLM (116) erneut erzeugt wird.

9. Verfahren nach einem der Ansprüche 6 bis 8, ferner umfassend:
Erzeugen eines Hash für den Befehl durch Anwenden einer Hash-Funktion auf den Befehl; und
Speichern des Hash und des ersten Teils des Softwarecodes in dem Dateisystem-Zwischenspeicher (118).

10. Verfahren nach Anspruch 9, ferner umfassend:
Identifizieren, durch die Skriptsprache-Schnittstelle (114), eines zweiten Befehls in dem Software-Programmiercode;
Erzeugen eines Hash für den zweiten Befehl durch Anwenden der Hash-Funktion auf den Befehl;
Bestimmen, ob der Hash für den zweiten Befehl in dem Dateisystem-Zwischenspeicher (118) enthalten ist; und
als Antwort auf eine Bestimmung, dass der Hash für den zweiten Befehl in dem Dateisystem-Zwischenspeicher (118) enthalten ist, Abfragen des ersten Teils des Softwarecodes von dem Dateisystem-Zwischenspeicher (118) und Einsetzen des ersten Teils des Softwarecodes in den Software-Programmiercode anstelle des Umwandelns des Befehls in einen Benutzerabschnitt der zweiten Aufforderung in natürlicher Sprache und des Sendens der zweiten Aufforderung in natürlicher Sprache zu dem LLM (116).

11. Nicht-flüchtiges maschinenlesbares Medium, das Anweisungen speichert, die, wenn sie durch einen oder mehrere Prozessor(en) (410) ausgeführt werden, bewirken, dass der eine oder die mehreren Prozessor(en) (410) Vorgänge nach einem der Ansprüche 6 bis 10 durchführt/durchführen.

## Revendications

1. Un système (400) comprenant :
au moins un processeur matériel (410) ; et
un support lisible par ordinateur (430) stockant des instructions qui, lorsqu'elles sont exécutées par ledit au moins un processeur matériel (410), amènent ledit au moins un processeur matériel (410) à effectuer des opérations comprenant :
l'invocation (202) d'une interface de langage de script (114) qui est spécifiée dans un code de programmation logicielle, qui est conçue pour identifier une ou plusieurs commandes spécifiques dans un code de programmation logicielle, et avec laquelle un utilisateur peut communiquer afin de générer un code d'application à l'aide d'un modèle de langage à grande échelle (*Large Language Model -* LLM) (116) ;
l'identification (204), par l'interface de langage de script (114), d'une commande parmi ladite ou lesdites commandes spécifiques dans le code de programmation logicielle, la commande étant définie dans une bibliothèque d'interface de langage de script (108) incluant des fichiers spécifiques à un langage de programmation (110), et la commande incluant une première partie contenant une première invite en langage naturel pour générer un premier fragment de code logiciel et une deuxième partie contenant une ou plusieurs fonctions de test ;
la conversion (212), par l'interface de langage de script (114), de la commande incluant la première partie et la deuxième partie en une partie utilisateur d'une deuxième invite en langage naturel ;
l'ajout d'une partie système prédéfinie à la deuxième invite en langage naturel ;
l'envoi (214) de la deuxième invite en langage naturel au LLM (116) afin de générer le premier fragment de code logiciel dans un premier langage de programmation sur la base de la deuxième invite en langage naturel ;
la validation (220) du premier fragment de code logiciel à l'aide d'une fonction de validation du premier langage de programmation afin de déterminer si le premier fragment de code logiciel est valide conformément à une ou plusieurs exigences du premier langage de programmation ;
en réponse à une détermination selon laquelle le premier fragment de code logiciel est valide conformément à la ou auxdites exigences du premier langage de programmation, le test (222) du premier fragment de code logiciel à l'aide de la ou desdites fonctions de test ; et
en réponse à une détermination selon laquelle le premier fragment de code logiciel satisfait à l'ensemble de la ou desdites fonctions de test, l'insertion (224) du premier fragment de code logiciel dans le code de programmation logiciel.

2. Le système d'après la revendication 1, sachant que, en réponse à une détermination selon laquelle le premier fragment de code logiciel échoue à la fonction de validation, le premier fragment de code logiciel est régénéré par un nouvel envoi de la deuxième invite en langage naturel au LLM (116).

3. Le système d'après la revendication 1, sachant que, en réponse à une détermination selon laquelle le premier fragment de code logiciel échoue à une ou plusieurs de la ou desdites fonctions de test, le premier fragment de code logiciel est régénéré par un nouvel envoi de la deuxième invite en langage naturel au LLM (116).

4. Le système d'après l'une quelconque des revendications précédentes, sachant que les opérations comprennent en outre :
la génération (206) d'une valeur de hachage pour la commande par application d'une fonction de hachage à la commande ; et
la sauvegarde (208) de la valeur de hachage et du premier fragment de code logiciel dans le cache du système de fichiers (118).

5. Le système d'après la revendication 4, sachant que les opérations comprennent en outre :
l'identification, par l'interface de langage de script (114), d'une deuxième commande dans le code de programmation logicielle ;
la génération d'une valeur de hachage pour la deuxième commande par application de la fonction de hachage à ladite commande ;
la détermination du fait que la valeur de hachage de la deuxième commande est contenue dans le cache du système de fichiers (118) ; et,
en réponse à la détermination selon laquelle la valeur de hachage pour la deuxième commande est contenue dans le cache du système de fichiers (118), la récupération (210) du premier fragment de code logiciel à partir du cache du système de fichiers (118) et l'insertion du premier fragment de code logiciel dans le code de programmation logicielle au lieu de la conversion de la commande en une partie utilisateur de la deuxième invite en langage naturel et l'envoi de la deuxième invite en langage naturel au LLM (116).

6. Un procédé (200) comprenant :
l'invocation (202) d'une interface de langage de script (114) qui est spécifiée dans un code de programmation logicielle, qui est conçue pour identifier une ou plusieurs commandes spécifiques dans un code de programmation logicielle, et avec laquelle un utilisateur peut communiquer afin de générer un code d'application à l'aide d'un modèle de langage à grande échelle (*Large Language Model* - LLM) (116) ;
l'identification (204), par l'interface de langage de script (114), d'une commande parmi ladite ou lesdites commandes spécifiques dans le code de programmation logicielle, la commande étant définie dans une bibliothèque d'interface de langage de script (108) incluant des fichiers spécifiques à un langage de programmation (110), et la commande incluant une première partie contenant une première invite en langage naturel pour générer un premier fragment de code logiciel et une deuxième partie contenant une ou plusieurs fonctions de test ;
la conversion (212), par l'interface de langage de script (114), de la commande incluant la première partie et la deuxième partie en une partie utilisateur d'une deuxième invite en langage naturel ;
l'ajout d'une partie système prédéfinie à la deuxième invite en langage naturel ;
l'envoi (214) de la deuxième invite en langage naturel au LLM (116) afin de générer le premier fragment de code logiciel dans un premier langage de programmation sur la base de la deuxième invite en langage naturel ;
la validation (220) du premier fragment de code logiciel à l'aide d'une fonction de validation du premier langage de programmation afin de déterminer si le premier fragment de code logiciel est valide conformément à une ou plusieurs exigences du premier langage de programmation ;
en réponse à une détermination selon laquelle le premier fragment de code logiciel est valide conformément à la ou auxdites exigences du premier langage de programmation, le test (222) du premier fragment de code logiciel à l'aide de la ou desdites fonctions de test ; et
en réponse à une détermination selon laquelle le premier fragment de code logiciel satisfait à l'ensemble de la ou desdites fonctions de test, l'insertion (224) du premier fragment de code logiciel dans le code de programmation logiciel.

7. Le procédé d'après la revendication 6, sachant que, en réponse à une détermination selon laquelle le premier fragment de code logiciel échoue à la fonction de validation, le premier fragment de code logiciel est régénéré par un nouvel envoi de la deuxième invite en langage naturel au LLM (116).

8. Le procédé d'après la revendication 6, sachant que, en réponse à une détermination selon laquelle le premier fragment de code logiciel échoue à une ou plusieurs de la ou desdites fonctions de test, le premier fragment de code logiciel est régénéré par un nouvel envoi de la deuxième invite en langage naturel au LLM (116).

9. Le procédé d'après l'une quelconque des revendications de 6 à 8, comprenant en outre :
la génération d'une valeur de hachage pour la commande par application d'une fonction de hachage à la commande ; et
la sauvegarde de la valeur de hachage et du premier fragment de code logiciel dans le cache du système de fichiers (118).

10. Le procédé d'après la revendication 9, comprenant en outre :
l'identification, par l'interface de langage de script (114), d'une deuxième commande dans le code de programmation logicielle ;
la génération d'une valeur de hachage pour la deuxième commande par application de la fonction de hachage à ladite commande ;
la détermination du fait que la valeur de hachage de la deuxième commande est contenue dans le cache du système de fichiers (118) ; et,
en réponse à la détermination selon laquelle la valeur de hachage pour la deuxième commande est contenue dans le cache du système de fichiers (118), la récupération (210) du premier fragment de code logiciel à partir du cache du système de fichiers (118) et l'insertion du premier fragment de code logiciel dans le code de programmation logicielle au lieu de la conversion de la commande en une partie utilisateur de la deuxième invite en langage naturel et l'envoi de la deuxième invite en langage naturel au **LLM** (116).

11. Un support non transitoire lisible par machine stockant des instructions qui, lorsqu'elles sont exécutées par un ou plusieurs processeurs (410), amènent le ou les processeurs (410) à effectuer des opérations d'après l'une quelconque des revendications de 6 à 10.
